# DEMANDE DE BREVET EUROPEEN

(11) **EP 0 714 870 A1**
(43) Date de publication de la demande: **05.06.1996**
(21) Numéro de dépôt: 95402379.2
(22) Date de dépôt: 25.10.1995
(51) Int. Cl.: C04B 41/48

(54) **Procédé et composition pour le traitement oléophobe et hydrophobe des matériaux de construction**

(30) Priorité: 29.11.1994 FR 9414280
(71) Demandeur: ELF ATOCHEM S.A., F-92800 Puteaux (FR)
(72) Inventeur: Corpart, Jean-Marc, F-95110 Sannois (FR); Alonzo, Denis, F-27100 Val de Reuil (FR)
(74) Mandataire: Leboulenger, Jean

(57) **Abrégé**

L'invention concerne le traitement oléophobe et hydrophobe des matériaux de construction au moyen de copolymères acryliques fluorés hydrosolubles.

Pour réduire la quantité nécessaire de copolymère acrylique fluoré, on l'associe à un alcool polyvinylique.

## Description

La présente invention concerne le traitement oléophobe et hydrophobe des matériaux de construction tels que briques, tuiles, pierres, céramiques, plâtres, bétons, ciments, mortiers, et a plus particulièrement pour objet un procédé et une composition pour le traitement anti-salissures des murs, des façades ou des sols.

Dans le cas des matériaux (notamment pavés en béton ou dalles en pierre) constituant le revêtement des sols comme les trottoirs et les rues piétonnes, on demande plus spécialement que le traitement leur confère une excellente résistance aux substances grasses et huileuses. On peut obtenir ce résultat en traitant à saturation les matériaux de revêtement de sols avec une solution aqueuse d'un copolymère acrylique fluoré tel que décrit dans la demande de brevet EP 542 598. Cependant, la concentration en matière active doit être de l'ordre de 20 à 25 %, ce qui rend le traitement particulièrement onéreux et donc peu attractif.

Il a maintenant été trouvé qu'on peut remédier à cet inconvénient et obtenir des performances équivalentes avec des doses bien plus faibles de copolymère acrylique fluoré si on associe ce dernier à un alcool polyvinylique. Avec une concentration en matières actives totale faible (inférieure à 5 %), il est possible de conférer au matériau traité d'excellentes propriétés hydrophobes et oléophobes, et en particulier une résistance spectaculaire à l'huile de vidange.

Pour 100 parties en poids de copolymère acrylique fluoré, on peut utiliser de 5 à 800 parties en poids d'alcool polyvinylique, de préférence de 50 à 200 parties.

Le procédé selon l'invention est avantageusement mis en oeuvre au moyen d'une composition consistant en une solution aqueuse comprenant en poids :
(a) de 0,25 à 2 %, de préférence de 0,5 à 1,5 % d'un copolymère acrylique fluoré hydrosoluble ;
(b) de 0,1 à 4 %, de préférence de 0,5 à 2 % d'un alcool polyvinylique ;
(c) de 0 à 2,5 %, de préférence de 0 à 1,75 % d'un ou plusieurs solvants organiques miscibles à l'eau ; et
(d) de l'eau de dilution pour complément à 100 %, les proportions respectives de copolymère acrylique fluoré et d'alcool polyvinylique étant telles que définies précédemment.

Les copolymères acryliques fluorés hydrosolubles à utiliser conformément à la présente invention sont avantageusement ceux décrits dans la demande de brevet EP 542 598 dont le contenu est incorporé ici par référence. Il s'agit de copolymères cationiques qui comprennent en poids :
***(a)*** 50 à 92 % d'un ou plusieurs monomères polyfluorés de formule générale : 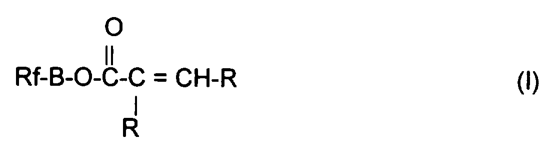 dans laquelle Rf représente un radical perfluoré à chaîne droite ou ramifiée, contenant 2 à 20 atomes de carbone, de préférence 4 à 16 atomes de carbone, B représente un enchaînement bivalent lié à O par un atome de carbone et pouvant comporter un ou plusieurs atomes d'oxygène, de soufre et/ou d'azote, l'un des symboles R représente un atome d'hydrogène et l'autre un atome d'hydrogène ou un radical alkyle contenant 1 à 4 atomes de carbone ;
***(b)*** 1 à 25 % d'un ou plusieurs monomères de formule générale : 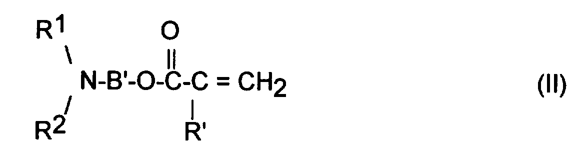 dans laquelle B' représente un radical alkylène, linéaire ou ramifié, contenant 1 à 4 atomes de carbone, R' représente un atome d'hydrogène ou un radical alkyle contenant 1 à 4 atomes de carbone, R¹ et R², identiques ou différents, représentent chacun un atome d'hydrogène, un radical alkyle linéaire ou ramifié contenant 1 à 18 atomes de carbone ou un radical hydroxyéthyle ou benzyle, ou R¹ et R² ensemble avec l'atome d'azote auquel ils sont liés forment un radical morpholino, pipéridino ou pyrrolidinyle-1 ;
***(c)*** 1 à 25 % d'un dérivé vinylique de formule générale :

   R"-CH = CH₂ (III)

   dans laquelle R" peut être un groupement alkylcarboxylate ou alkyléther contenant de 1 à 18 atomes de carbone ;
***(d)*** 0 à 10 % d'un monomère quelconque autre que les monomères de formules I, II et III.

On utilise de préférence les copolymères fluorés comprenant en poids 70 à 90 % de monomère(s) polyfluoré(s) de formule (I), 8 à 18 % de monomère(s) de formule (Il), 2 à 10 % de monomère(s) de formule (III) et de 0 à 8 % d'un autre monomère (d).

D'autres copolymères fluorés hydrosolubles, avantageusement utilisables conformément à la présente invention sont ceux décrits dans le brevet FR 2 579 211 dont le contenu est incorporé ici par référence. Il s'agit de copolymères comprenant en poids :
***(a)*** 30 à 75 %, de préférence 40 à 65 %, d'un ou plusieurs monomères polyfluorés de formule (I),
***(b)*** 25 à 70 %, de préférence 30 à 60 %, d'un ou plusieurs monomères de formule générale : 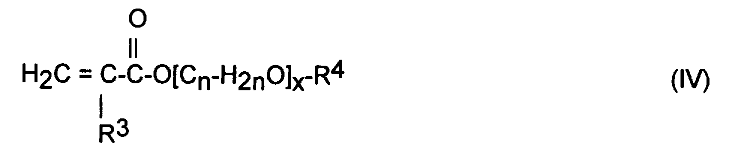 dans laquelle R³ représente un atome d'hydrogène ou un radical méthyle, R⁴ représente un radical alkyle contenant 1 à 4 atomes de carbone, n est égal à 2 ou 3 et x est un nombre entier allant de 1 à 10, et éventuellement
***(c)*** jusqu'à 10 %, de préférence moins de 5 %, d'un ou plusieurs monomères quelconques autres que ceux des formules (I) et (IV).

Les alcools polyvinyliques à utiliser conformément à la présente invention sont des composés bien connus, décrits par exemple dans Encyclopedia of Polymer Science and Engineering, 2^{ème} édition, volume 17, page 167. Ils sont généralement obtenus par hydrolyse des polyacétates de vinyle. La réaction est le plus souvent arrêtée avant l'hydrolyse complète et il reste dans la molécule des motifs acétate. La proportion de ces groupes acétate non modifiés est exprimée par l'indice d'ester qui, par définition, est le nombre de milligrammes de potasse nécessaires pour saponifier complètement un gramme de produit. Les alcools polyvinyliques peuvent se classer en trois catégories, suivant leur indice d'ester :
- les alcools polyvinyliques à bas indice d'ester (inférieur à 30) correspondant à un taux d'hydrolyse supérieur à 98 % (produits totalement hydrolysés),
- les alcools polyvinyliques à indice d'ester moyen (de l'ordre de 100 à 150) correspondant à un taux d'hydrolyse de 86 à 92 %,
- les alcools polyvinyliques à indice d'ester élevé (de l'ordre de 200 à 300) correspondant à un taux d'hydrolyse de 70 à 80 % (produits peu hydrolysés).

Dans chacune de ces trois catégories, les alcools polyvinyliques se distinguent par leur degré de condensation exprimé par la viscosité d'une solution aqueuse type, cette viscosité étant d'autant plus élevée que le degré de condensation est plus grand. Pour une solution aqueuse à 4 % en poids, la mesure de la viscosité à 20°C avec un viscosimètre à capillaire du type Ostwald permet de distinguer trois nouvelles catégories :
- les alcools polyvinyliques à basse viscosité, inférieure à 6 mPa.s,
- les alcools polyvinyliques à viscosité moyenne, comprise entre 6 et 22 mPa.s, et
- les alcools polyvinyliques à haute viscosité comprise entre 22 et 32 mPa.s.

Les différents types d'alcools polyvinyliques peuvent être utilisés selon l'invention. Cependant, on préfère utiliser un alcool polyvinylique à bas indice d'ester et haute viscosité.

Les solvants organiques, miscibles à l'eau, éventuellement présents dans la composition selon l'invention, proviennent de la synthèse du copolymère acrylique fluoré et sont par exemple ceux mentionnés dans la demande de brevet EP 542 598. On peut citer, plus particulièrement, l'acétone, le tétrahydrofuranne, le dioxane, le diméthylformamide, la N-méthyl-pyrrolidone-2, le diméthylsulfoxyde, l'éthanol, l'iso-propanol, l'éthylène glycol et le propylène glycol.

Les compositions selon l'invention peuvent être préparées par simple mélange d'une solution aqueuse d'alcool polyvinylique avec une solution du copolymère acrylique fluoré dans l'eau pure ou dans un mélange d'eau et de solvant(s) organique(s).

L'alcool polyvinylique se présente généralement sous la forme d'une poudre blanche plus ou moins granuleuse dont la solubilisation dans l'eau nécessite une étape de chauffage à une température comprise entre 80 et 95°C, pendant un temps variable de 10 à 30 minutes. La durée et la température de dissolution dépendent de l'indice d'ester et du degré de condensation de l'alcool polyvinylique, ainsi que du matériel de dissolution utilisé.

Les compositions selon l'invention sont stables au stockage pendant plusieurs mois. Leur application sur les matériaux de construction peut se faire en une ou plusieurs couches suivant les techniques bien connues en soi, par exemple par pulvérisation, immersion, étendage à la brosse ou au rouleau, de façon à déposer 80 à 1500 g de composition selon l'invention par m² de surface à traiter.

Le revêtement obtenu est classiquement séché à température ambiante, mais il peut également être séché à une température plus élevée dans un four ou une étuve.

Selon une autre modalité de la présente invention, on peut aussi effectuer l'application en déposant d'abord sur le support à traiter une solution aqueuse d'alcool polyvinylique, puis une solution du copolymère acrylique fluoré ou inversement.

Pour évaluer les performances des substrats traités selon l'invention, on a utilisé les tests suivants :

### TEST D'OLEOPHOBIE

- L'oléophobie a été mesurée suivant la méthode décrite dans "AATCC Technical Manual", test method 118, qui évalue la non mouillabilité du substrat par une série de liquides huileux dont les tensions superficielles sont de plus en plus faibles.
- Un autre test consiste à mesurer le temps de pénétration d'une goutte de dodécane (huile n°5 du test AATCC 118) déposée sur le support.

### TEST D'HYDROPHOBIE

Pour tester la résistance à l'eau des supports, on a mesuré le temps de pénétration d'une goutte d'eau dans le matériau.

### TEST DE RESISTANCE A L'HUILE DE VIDANGE

On dépose sur le support des gouttes d'huile de vidange d'automobile et les y laisse pendant 7 jours. Les gouttes d'huile sont ensuite chassées du support par projection d'eau chaude (température supérieure à 50°C) sous une pression de 140 bars.

L'examen de la forme des gouttes d'huile présentes sur le support après 7 jours et de l'aspect du support après nettoyage permet la cotation suivante :
**0** : Les gouttes d'huile ont pénétré totalement dans le support au cours des 7 jours, laissant en surface des taches très marquées; l'eau sous pression n'a aucun effet.
**1**: Les gouttes d'huile demeurent présentes partiellement en surface du substrat au bout de 7 jours ; le nettoyage à l'eau sous pression ne permet pas d'atténuer les taches d'huile.
**2** : Les gouttes d'huile demeurent présentes partiellement en surface du substrat au bout de 7 jours ; le nettoyage à l'eau sous pression permet une atténuation sensible des taches.
**3** : Les gouttes d'huile se sont étalées sur le support (angle de contact inférieur à 90°) sans pénétration visible; le nettoyage à l'eau sous pression chasse les gouttes d'huile, mais laisse une tache bien visible à chaque emplacement de goutte.
**4** : Les gouttes d'huile ne se sont pas étalées sur le support (angle de contact supérieur à 90°) et aucune pénétration n'est visible ; le nettoyage à l'eau sous pression chasse les gouttes d'huile, mais laisse une tache bien visible à chaque emplacement de goutte.
**5** : Les gouttes d'huile ne se sont pas étalées sur le support (angle de contact supérieur à 90°) et aucune pénétration n'est visible ; le nettoyage à l'eau sous pression chasse les gouttes d'huile et il n'y a aucune trace visible à chaque emplacement de goutte: le support a retrouvé son aspect d'origine.

Les exemples suivants illustrent l'invention sans la limiter. Sauf mention contraire, les parties et les pourcentages sont exprimés en poids. Les tests sont effectués après 2 jours de séchage à température ambiante.

### EXEMPLE 1

On a utilisé, d'une part, un alcool polyvinylique ayant un indice d'ester de 10 et une viscosité de 30 mPa.s et, d'autre part, une solution de copolymère acrylique fluoré à 25 % de matière sèche telle que décrite à l'exemple 4 de la demande de brevet EP 542 598 (solution S4).

Une solution aqueuse à 1 % d'alcool polyvinylique a été préparée en dissolvant l'alcool polyvinylique dans l'eau sous agitation (500 tr/min) à une température de 90°C maintenue pendant 30 minutes.

Après refroidissement, on a ajouté à 95 parties de cette solution 5 parties de la solution S4 et obtenu ainsi une composition (C1) selon l'invention contenant 0,95 % d'alcool polyvinylique et 1,25 % de copolymère acrylique fluoré.

On a appliqué cette composition sur des plaques en béton de façade, à raison de 300 g/m². A titre comparatif, on a également appliqué de la même façon et sur les mêmes supports une composition (Ca) constituée d'une solution aqueuse à 2,2 % du même alcool polyvinylique et une composition (Cb) obtenue en diluant 8,8 parties de solution S4 avec 91,2 parties d'eau.

Les compositions C1, Ca et Cb avaient toutes trois le même taux (2,2 %) de matière active. Le tableau suivant rassemble les résultats obtenus en soumettant aux tests précédemment décrits les plaques traitées avec ces compositions, ainsi qu'une plaque témoin non traitée.

| **COMPOSITION** | **TEMPS DE PENETRATION D'UNE GOUTTE D'EAU** | **AATCC 118** | **TEMPS DE PENETRATION D'UNE GOUTTE DE DODECANE** |
|---|---|---|---|
| C1 | 90 minutes | 8 | > 24 heures |
| Ca | 10 minutes | 0 | 0 |
| Cb | 90 minutes | 8 | 3 heures |
| Plaque non traitée | 0 | 0 | 0 |

L'examen des résultats montre que les composition C1 et Cb comportant le copolymère acrylique fluoré sont les seules à conférer aux plaques de réelles propriétés d'hydrophobie et d'oléophobie.

Avec la composition C1 selon l'invention, l'oléophobie du support est nettement améliorée puisque le temps de pénétration d'une goutte de dodécane est très supérieur à celui obtenu avec la composition Cb sans alcool polyvinylique.

### EXEMPLE 2

La composition C1 de l'exemple 1 a été appliquée, à raison de 1000 g/m², sur des pavés auto-bloquants en béton destinés au revêtement des trottoirs ou des rues piétonnes.

A titre de comparaison, on a appliqué dans les mêmes conditions et sur des supports identiques la composition Cb, la solution S4 et une composition Cc obtenue en mélangeant 50 parties de solution S4 et 50 parties d'eau.

Les pavés traités et un pavé non traité ont été soumis au test de résistance à l'huile de vidange. Le tableau suivant rassemble les résultats obtenus.

| **COMPOSITION** | **TENEUR EN COPOLYMERE FLUORE** | **TEST DE RESISTANCE A L'HUILE DE VIDANGE** |
|---|---|---|
| C1 | 1,25 % | 5 |
| Cb | 2,2 % | 3 |
| Cc | 12,5 % | 4 |
| S4 | 25 % | 5 |
| Pavé non traité | - | 0 |

Seule la composition C1 selon l'invention et la solution S4 permettent d'obtenir un support dont l'aspect n'est pas dégradé après le test.

### EXEMPLE 3

On a préparé une composition C2 identique à la composition C1 de l'exemple 1, sauf qu'elle a été stockée pendant trois mois à température ambiante avant application.

Les compositions C1 et C2 ont été appliquées à raison de 1000 g/m² sur des pavés auto-bloquants en béton. On a obtenu les résultats suivants qui montrent qu'un stockage prolongé n'affecte pas les performances des compositions selon l'invention.

| | **Composition C1** | **Composition C2** |
|---|---|---|
| Durée de stockage | 0 | 3 mois |
| | | |
| Temps de pénétration d'une goutte d'eau | 4,5 heures | 5 heures |
| | | |
| Test AATCC 118 | 8 | 8 |
| | | |
| Temps de pénétration d'une goutte de dodécane | > 24 heures | > 24 heures |
| | | |
| Test de résistance à l'huile de vidange | 5 | 5 |

### EXEMPLE 4

On a utilisé, d'une part, un alcool polyvinylique ayant un indice d'ester de 8 et une viscosité de 28 mPa.s et, d'autre part, une solution de copolymère acrylique fluoré à 28 % de matière sèche telle que décrite à l'exemple 2 du brevet FR 2 579 211 (solution S2).

Une solution aqueuse à 1 % d'alcool polyvinylique a été préparée en dissolvant l'alcool polyvinylique dans l'eau sous agitation (500 tr/min) à une température de 90°C maintenue pendant 30 minutes.

Après refroidissement, on a ajouté à 95 parties de cette solution 5 parties de la solution S2 et obtenu ainsi une composition (C3) selon l'invention contenant 0,95 % d'alcool polyvinylique et 1,4 % de copolymère acrylique fluoré.

On a appliqué cette composition sur des pavés auto-bloquants en béton, à raison de 1000 g/m². A titre comparatif, on a également appliqué de la même façon et sur les mêmes supports une composition (Cd) obtenue en diluant 8,4 parties de solution S2 avec 91,6 parties d'eau.

Les compositions C3 et Cd avaient toutes deux le même taux (2,35 %) de matière active. Le tableau suivant rassemble les résultats obtenus en soumettant aux tests précédemment décrits les pavés traités avec ces compositions, ainsi qu'un pavé témoin non traité.

| **COMPOSITION** | **TEMPS DE PENETRATION D'UNE GOUTTE D'EAU** | **AATCC 118** | **TEMPS DE PENETRATION D'UNE GOUTTE DE DODECANE** | **TEST DE RESISTANCE A L'HUILE DE VIDANGE** |
|---|---|---|---|---|
| C3 | 5,5 heures | 8 | > 48 heures | 5 |
| Cd | 6 heures | 8 | < 24 heures | 3 |
| Pavé non traité | 0 | 0 | 0 | 0 |

Avec la composition C3 selon l'invention, l'oléophobie du support est nettement améliorée puisque le temps de pénétration d'une goutte de dodécane est supérieur à celui obtenu avec la composition Cd sans alcool polyvinylique. La composition C3 permet également d'obtenir un support dont l'aspect n'est pas dégradé après le test de résistance à l'huile de vidange.

## Revendications

1. Procédé de traitement oléophobe et hydrophobe des matériaux de construction, caractérisé en ce qu'on applique à la surface desdits matériaux un copolymère acrylique fluoré hydrosoluble et un alcool polyvinylique.

2. Procédé selon la revendication 1, dans lequel on utilise un copolymère acrylique fluoré comprenant en poids :
***(a)*** 50 à 92 % d'un ou plusieurs monomères polyfluorés de formule générale : 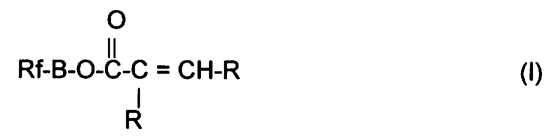 dans laquelle Rf représente un radical perfluoré à chaîne droite ou ramifiée, contenant 2 à 20 atomes de carbone, de préférence 4 à 16 atomes de carbone, B représente un enchaînement bivalent lié à O par un atome de carbone et pouvant comporter un ou plusieurs atomes d'oxygène, de soufre et/ou d'azote, l'un des symboles R représente un atome d'hydrogène et l'autre un atome d'hydrogène ou un radical alkyle contenant 1 à 4 atomes de carbone ;
***(b)*** 1 à 25 % d'un ou plusieurs monomères de formule générale : 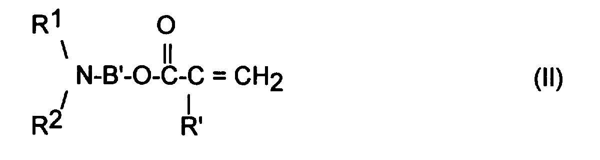 dans laquelle B' représente un radical alkylène, linéaire ou ramifié, contenant 1 à 4 atomes de carbone, R' représente un atome d'hydrogène ou un radical alkyle contenant 1 à 4 atomes de carbone, R¹ et R², identiques ou différents, représentent chacun un atome d'hydrogène, un radical alkyle linéaire ou ramifié contenant 1 à 18 atomes de carbone ou un radical hydroxyéthyle ou benzyle, ou R¹ et R² ensemble avec l'atome d'azote auquel ils sont liés forment un radical morpholino, pipéridino ou pyrrolidinyle-1 ;
***(c)*** 1 à 25 % d'un dérivé vinylique de formule générale :
R"-CH = CH₂ (III)
dans laquelle R" peut être un groupement alkylcarboxylate ou alkyléther contenant de 1 à 18 atomes de carbone ;
***(d)*** 0 à 10 % d'un monomère quelconques autre que les monomères de formules I, II et III.

3. Procédé selon la revendication 2, dans lequel le copolymère fluoré comprend en poids 70 à 90 % de monomère(s) polyfluoré(s) de formule (1), 8 à 18 % de monomère(s) de formule (Il), 2 à 10 % de monomère(s) de formule (III) et de 0 à 8 % d'un autre monomère (d).

4. Procédé selon la revendication 1, dans lequel on utilise un copolymère acrylique fluoré comprenant en poids :
***(a)*** 30 à 75 % d'un ou plusieurs monomères polyfluorés de formule (I),
***(b)*** 25 à 70 % d'un ou plusieurs monomères de formule générale : 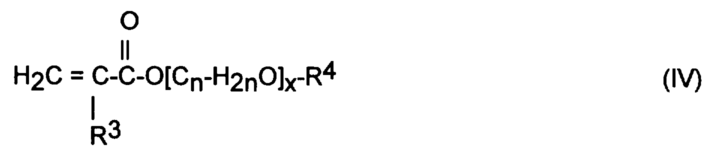 dans laquelle R³ représente un atome d'hydrogène ou un radical méthyle, R⁴ représente un radical alkyle contenant 1 à 4 atomes de carbone, n est égal à 2 ou 3 et x est un nombre entier allant de 1 à 10, et éventuellement
***(c)*** jusqu'à 10 % d'un ou plusieurs monomères quelconques autres que ceux des formules (I) et (IV).

5. Procédé selon la revendication 4, dans lequel le copolymère fluoré comprend en poids 40 à 65 % de monomère(s) polyfluoré(s) de formule (I), 30 à 60 % de monomère(s) de formule (IV) et jusqu'à 5 % d'autre(s) monomère(s).

6. Procédé selon l'une des revendications 1 à 5, dans lequel on ùtilise un alcool polyvinylique ayant un indice d'ester inférieur à 30 et dont une solution aqueuse à 4 % en poids a une viscosité à 20°C comprise entre 22 et 32 mPa.s.

7. Procédé selon l'une des revendications 1 à 6, dans lequel pour 100 parties en poids de copolymère acrylique fluoré, on utilise de 5 à 800 parties d'alcool polyvinylique, de préférence de 50 à 200 parties.

8. Composition aqueuse pour le traitement oléophobe et hydrophobe des matériaux de construction, caractérisée en ce qu'elle comprend en poids :
(a) de 0,25 à 2 % d'un copolymère acrylique fluoréhydrosoluble;
(b) de 0,1 à 4 % d'un alcool polyvinylique ;
(c) de 0 à 2,5 % d'un ou plusieurs solvants organiques miscibles à l'eau ; et
(d) de l'eau de dilution pour complément à 100 %, les proportions respectives de copolymère acrylique fluoré et d'alcool polyvinylique étant telles que définies dans la revendication 7.

9. Composition selon la revendication 8, comprenant de 0,5 à 1,5 % de copolymère acrylique fluoré, de 0,5 à 2 % d'alcool polyvinylique, et de 0 à 1,75 % de solvant(s) organique(s).
